**Europäisches Patentamt**

**European Patent Office**

**Office européen des brevets**

(19)

(11) Veröffentlichungsnummer: **0 009 127**
**A1**

# (12) EUROPÄISCHE PATENTANMELDUNG

(21) Anmeldenummer: **79103051.3**

(22) Anmeldetag: **20.08.79**

(51) Int. Cl.³: **H 04 M 19/08, H 04 M 9/08**

(30) Priorität: .15.09.78 DE 2840250

(43) Veröffentlichungstag der Anmeldung: **02.04.80**
**Patentblatt 80/7**

(84) Benannte Vertragsstaaten: **AT CH FR GB IT NL SE**

(71) Anmelder: **SIEMENS AKTIENGESELLSCHAFT Berlin und München, Postfach 22 02 61, D-8000 München 22 (DE)**

(72) Erfinder: **Walla, Klaus, Schrimpfstrasse 12, D-8035 Gauting (DE)**

(54) **Schaltungsanordnung für eine leitungsgespeiste Lautfernsprechstation.**

(57) Bei leitungsgespeister Lautfernsprechstation wird zur Spannungsstabilisierung ein Kondensator parallel zur Sprechschaltung geschaltet. Da der Empfangsverstärker einen Verbraucher mit stark schwankendem großem Stromverbrauch darstellt, muß dieser Kondensator verhältnismäßig groß bemessen sein. Dadurch ergibt sich nach dem Einschalten eine lange Aufladezeit, während der der Sendeverstärker (SV) und die Steuerschaltung (SS) ungenügend arbeiten.

Bei der Erfindung wird dieses Problem vermieden, indem parallel zum Empfangsverstärker (EV) ein erster Kondensator (C1) und parallel zur übrigen Sprechschaltung (SV, SS) ein zweiter Kondensator (C2) angeordnet ist, der gegenüber dem ersten Kondensator (C1) kleiner bemessen ist und nach dem Einschalten der Aufladevorgang des ersten Kondensators (C1) erst dann beginnt, wenn der Aufladevorgang des zweiten Kondensators (C2) beendet ist.

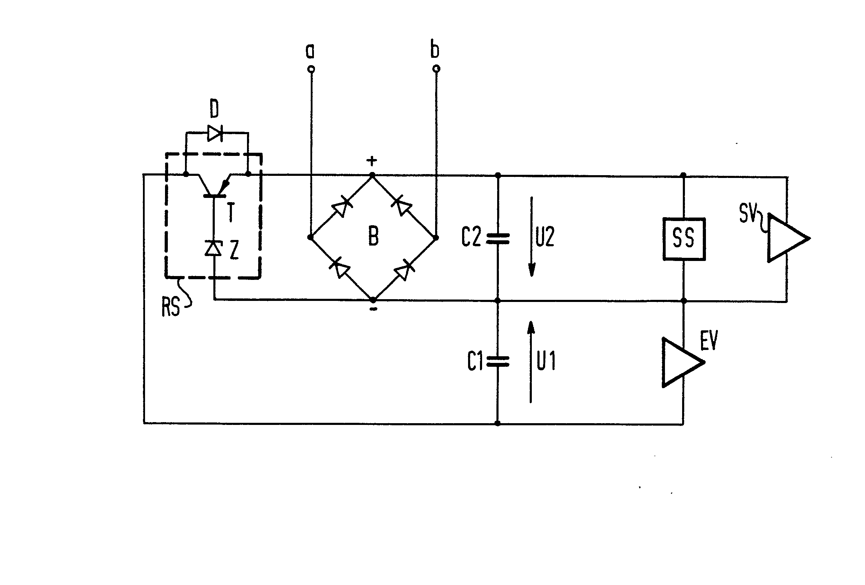

Die Erfindung ist in allen leitungsgespeisten Lautfernsprechstationen anwendbar (Fig. 1).

SIEMENS AKTIENGESELLSCHAFT     Unser Zeichen
Berlin und München     VPA 78 P 6 2 0 4 EUR

Schaltungsanordnung für eine leitungsgespeiste Lautfernsprechstation
--------------------------------------------------------------

Die Erfindung betrifft eine Schaltungsanordnung für eine leitungsgespeiste Lautfernsprechstation, deren Sprechschaltung einen Empfangs- und einen Sendeverstärker sowie eine das Zusammenwirken der beiden Verstärker regelnde Steuerschaltung enthält, wobei zwischen der Sprechschaltung und einer Gleichrichterbrücke, über die die Speisespannung für die Sprechschaltung zugeführt wird, ein Kondensator zur Spannungsstabilisierung angeordnet ist.

Bei langen Anschlußleitungen stehen in den oben genannten Lautfernsprechstationen nur noch kleine Ströme zur Verfügung. Da die Endstufe des Empfangsverstärkers einen Verbraucher mit stark schwankendem, relativ großem Stromverbrauch darstellt, muß als Kondensator zur Spannungs-

Som 1 Stl / 15.9.1978

stabilisierung ein Kondensator großer Kapazität vorgesehen werden. Im Gegensatz zum Empfangsverstärker stellen der Sendeverstärker und die Steuerschaltung Verbraucher dar, die mit konstanten, relativ kleinen Strömen auskommen. Aufgrund des hohen Leitungswiderstandes bei langen Anschlußleitungen wird nach Einschalten des Gerätes der Kondensator zur Spannungsstabilisierung mit Konstantstrom aufgeladen, was aufgrund der großen Kapazität des Kondensators einige Sekunden dauern kann. Während dieser Zeit arbeiten der Sendeverstärker und insbesondere die Steuerschaltung, die für die Sprachsteuerung wichtig ist, ungenügend.

Um diesen Nachteil zu unterbinden, ging man bei Unterschreiten eines bestimmten Schleifenstromes zur Fremdspeisung über. Dies erforderte allerdings umfangreiche zusätzliche Schaltmaßnahmen. Die Aufgabe der vorliegenden Erfindung besteht darin, eine Schaltungsanordnung der eingangs genannten Art anzugeben, bei der nach dem Einschalten der Lautfernsprecheinrichtung die Steuerschaltung und der Sendeverstärker möglichst schnell voll wirksam geschaltet werden.

Diese Aufgabe wird für die obengenannte Schaltungsanordnung erfindungsgemäß dadurch gelöst, daß parallel zum Empfangsverstärker ein erster Kondensator und parallel zur übrigen Sprechschaltung ein zweiter Kondensator angeordnet ist, wobei der zweite Kondensator gegenüber dem ersten Kondensator kleiner bemessen ist, und daß eine Regelschaltung vorgesehen ist, die bewirkt, daß der Aufladevorgang des ersten Kondensators beginnt, wenn der Aufladevorgang des zweiten Kondensators beendet ist.

Durch die Verwendung zweier unterschiedlich dimensionierter Kondensatoren zur Spannungsstabilisierung für die Sprechschaltung wird bei der erfindungsgemäßen Schaltungsanordnung erreicht, daß nach dem Einschalten der Lautfernsprecheinrichtung der Sendeverstärker und die Regelschaltung sehr schnell wirksam geschaltet werden. Dies ist deshalb notwendig, da sich die Lautfernsprechstation nach dem Einschalten in der empfangsseitigen Ruhelage befindet, damit die über lange Verbindungsleitungen sehr schwach ankommenden Signale des fernen Teilnehmers gegenüber den mit relativ hohem und gleichmäßigem Pegel vorliegenden Sendesignalspannungen bevorzugt werden.

Eine zweckmäßige Ausgestaltung der erfindungsgemäßen Schaltungsanordnung ist dadurch gekennzeichnet, daß der zweite Kondensator zwischen den Ausgängen der Gleichrichterbrücke und parallel zur Regelschaltung und zum Sendeverstärker angeordnet ist und eine Reihenschaltung, bestehend aus dem ersten Kondensator und der Kollektor-Emitter-Strecke eines Schalttransistors, zwischen den Ausgängen der Gleichrichterbrücke und parallel zum Empfangsverstärker angeordnet ist, und daß der negativeres Potential führende Ausgang der Gleichrichterbrücke direkt mit jedem der beiden Kondensatoren und über eine Zenerdiode mit der Basis des Schalttransistors verbunden ist. Diese Ausgestaltung der erfindungsgemäßen Schaltungsanordnung zeichnet sich durch einen einfachen, integrierbaren Aufbau aus, da die Regelschaltung, die die Aufladevorgänge der beiden Kondensatoren bestimmt, lediglich aus zwei Bauelementen, einer Zenerdiode und einem Schalttransistor, besteht.

Ein Ausführungsbeispiel der Erfindung soll anhand einer Figur erläutert werden.

Die Figur zeigt den prinzipiellen Aufbau einer Sprechschaltung einer leitungsgespeisten Lautfernsprechstation gemäß der Erfindung, wobei nur die Stromversorgung der einzelnen Bausteine der Sprechschaltung dargestellt ist.

In der Figur sind dargestellt der Empfangsverstärker EV, der Sendeverstärker SV, die Steuerschaltung SS, die beiden Kondensatoren C1' und C2, die Gleichrichterbrücke B, sowie die Regelschaltung RS, bestehend aus dem Schalttransistor T und der Zenerdiode Z. Die nach dem Einschalten der Lautfernsprecheinrichtung anliegende Speisespannung wird der Sprechschaltung, bestehend aus dem Empfangsverstärker EV, dem Sendeverstärker SV und der Steuerschaltung SS über die Gleichrichterbrücke B zugeführt. Dabei dienen die parallel zu den einzelnen Gruppen der Sprechschaltung liegenden Kondensatoren C1 und C2 zur Siebung und Energiespeicherung.

Parallel zum Kondensator C2 und zum Ausgang der Gleichrichterbrücke liegt die Reihenschaltung der Zenerdiode Z und der Basis-Emitter-Strecke des Schalttransistors T. Um den Forderungen bezüglich des maximalen Gleichstromwiderstandes einer Fernsprechstation zu genügen, wird üblicherweise parallel zur Speisespannung eine Zenerdiode geschaltet, die den gerade nicht benötigten Strom ableitet. Bei der vorliegenden erfindungsgemäßen Schaltungsanordnung ist eine Zenerdiode gewählt, deren Spannung um den Wert der Spannung der Basis-Emitter-Diode des Schalttransistors T niedriger ist.

Aus der Figur ist zu erkennen, daß bei Anlegen der Speisespannung an die Anschlußpunkte a, b  der Schalttransistor T  gesperrt ist. Nach dem Aufladen des
Kondensators C2, dessen Kapazität kleiner als die des
Kondensators C1  ist, wird der Schalttransistor über
die Zenerdiode·Z  aufgesteuert. Mit dem Aufsteuern des
Schalttransistors T  beginnt dann der Aufladevorgang
des Kondensators C1.

Bei dem dargestellten Ausführungsbeispiel ist zusätzlich noch eine Diode parallel zur Kollektor-Emitter-
Strecke des Schalttransistors T  vorgesehen. Diese
Diode bewirkt eine Entladung des Kondensators C1
über die Steuerschaltung SS  und den Sendeverstärker
SV nach dem Abschalten der Lautfernsprecheinrichtung.
Ohne diese Diode D  würde der Endverstärker des Empfangsverstärkers EV  die beim Zusammenbrechen der am Kondensator C2  anliegenden Speisespannung für die Steuerschaltung SS  und den Sendeverstärker SV  entstehenden
Geräusche an den Lautsprecher weitergeben.

2  Patentansprüche
1  Figur

Patentansprüche

1. Schaltungsanordnung für eine leitungsgespeiste Lautfernsprechstation, deren Sprechschaltung einen Empfangs-
und einen Sendeverstärker sowie eine das Zusammenwirken
der beiden Verstärker regelnde Steuerschaltung enthält,
wobei zwischen der Sprechschaltung und einer Gleichrichterbrücke, über die die Speisespannung für die Sprechschaltung zugeführt wird, ein Kondensator zur Spannungsstabilisierung angeordnet ist, d a d u r c h   g e k e n n -
z e i c h n e t , daß parallel zum Empfangsverstärker
(EV) ein erster Kondensator (C1) und parallel zur übrigen Sprechschaltung (SS, SV) ein zweiter Kondensator
(C2) angeordnet ist, wobei der zweite Kondensator (C2)
gegenüber dem ersten Kondensator (C1) kleiner bemessen
ist, und daß eine Regelschaltung (RS) vorgesehen ist,
die bewirkt, daß der Aufladevorgang des ersten Kondensators (C1) beginnt, wenn der Aufladevorgang des zweiten Kondensators (C2) beendet ist.

2. Schaltungsanordnung nach Anspruch 1, d a d u r c h
g e k e n n z e i c h n e t , daß der zweite Kondensator (C2) zwischen den Ausgängen (+, -) der Gleichrichterbrücke (B) und parallel zur Steuerschaltung
(SS) und zum Sendeverstärker (SV) angeordnet ist und
eine Reihenschaltung, bestehend aus dem ersten Kondensator (C1) und der Kollektor-Emitter-Strecke eines
Schalttransistors (T) zwischen den Ausgängen (+,-) der
Gleichrichterbrücke (B) und parallel zum Empfangsverstärker (EV) angeordnet ist, und daß der negativeres
Potential führende Ausgang (-) der Gleichrichterbrücke
(B) direkt mit jedem der beiden Kondensatoren (C1,C2)
und über eine Zenerdiode (Z) mit der Basis des Schalttransistors (T) verbunden ist.

Europäisches
Patentamt

**EUROPÄISCHER RECHERCHENBERICHT**

0009127

Nummer der Anmeldung

EP 79 10 3051

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | <u>US - A - 3 513 259</u> (LINDGREN)<br><br>* Spalte 2, Zeilen 25-38; 60-67; Spalte 4, Zeilen 49-55; Spalte 5, Zeilen 26-35; Abbildungen 1, 2 *<br><br>-- | 1,2 | H 04 M 19/08<br>9/08 |
| | <u>DE - A - 2 533 888</u> (STANDARD ELEK-TRIK LORENZ)<br><br>* Ansprüche; Abbildungen 2,4 *<br><br>-- | 1,2 | |
| | <u>GB - A - 1 349 734</u> (POST OFFICE)<br><br>* Seite 3, Zeilen 90-105; Ab-bildung *<br><br>-- | 1,2 | **RECHERCHIERTE SACHGEBIETE (Int. Cl. 3)**<br><br>H 04 M 9/08<br>9/10<br>19/06<br>19/08<br>1/60 |
| | <u>FR - A - 1 119 874</u> (ISEC)<br><br>* Seite 4, rechte Spalte, Zeile 34 - Seite 5, rechte Spalte, Zeile 9; Abbildung 10 *<br><br>---- | 1,2 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-12-1979 | YOULE |

EPA form 1503.1   06.78